# EUROPÄISCHE PATENTSCHRIFT

(11) **EP 3 341 693 B1**
(45) Veröffentlichungstag und Bekanntmachung des Hinweises auf die Patenterteilung: **02.10.2019**
(21) Anmeldenummer: 16753337.1
(22) Anmeldetag: 12.08.2016
(51) Int. Cl.: G01K 1/16, G01K 7/16, G01K 1/14

(54) **VERFAHREN ZUR HERSTELLUNG EINES TEMPERATURSENSORS**
METHOD FOR PRODUCING A TEMPERATURE SENSOR
PROCÉDÉ DE PRODUCTION D'UN CAPTEUR DE TEMPÉRATURE

(30) Priorität: 28.08.2015 DE 102015114314
(43) Veröffentlichungstag der Anmeldung: 04.07.2018
(73) Patentinhaber: Innovative Sensor Technology IST AG, 9642 Ebnat-Kappel (CH)
(72) Erfinder: VARFOLOMEEVA, Julia, 8005 Zürich (CH); KROGMANN, Florian, 8280 Kreuzlingen (CH)
(74) Vertreter: Andres, Angelika Maria
(86) Internationale Anmeldenummer: PCT/EP2016/069192
(87) Internationale Veröffentlichungsnummer: WO 2017/036760

(56) Entgegenhaltungen:
- DE-A1-102010 050 315
- DE-A1-102013 208 785
- JP-A- S58 158 980

## Beschreibung

Die Erfindung bezieht sich auf ein Verfahren zur Herstellung eines Temperatursensors sowie einen Temperatursensor zum Einsatz bei hohen Temperaturen, vorzugsweise bei Temperaturen oberhalb von in etwa 200°C.

Aus dem Stand der Technik sind zahlreiche Temperatursensorelemente zur Bestimmung einer Temperatur bekannt. Diese werden bspw. in Dünnschichttechnik gefertigt und weisen auf einem Substrat eine funktionale Schicht, bspw. aus Platin, auf. Mittels dieser funktionalen Schicht lässt sich eine Temperatur eines Mediums, mit dem die funktionale Schicht in thermischer Wechselwirkung steht, bestimmen.

Für den Einsatz werden derartige Temperatursensorelemente zum Schutz vor äußeren Einflüssen (mechanische, chemische, etc.) in ein Gehäuse eingebracht. Dies führt jedoch zu einer Beeinflussung der thermischen Wechselwirkung zwischen Temperatursensorelement und Medium, sodass eine verzögerte bzw. eine reduzierte Ansprechzeit entsteht.

Um die Ansprechzeit eines solchen Temperatursensorelementes zu erhöhen, wird immer häufiger darauf zurückgegriffen, dass das Temperatursensorelement mittels eines Lötzinns auf einen Bodenträger des Gehäuses gelötet wird, umso eine verbesserte thermische Wechselwirkung zu erzielen. Hierfür wird auf konventionelle Löttechniken zurückgegriffen, welche wiederum hinsichtlich der Schmelztemperatur neue Herausforderungen bergen. So ist in den letzten Jahren eine Tendenz zu erkennen, bleifreie Lote zu verwenden. Bleifreie Lote, insbesondere bleifreie Niedertemperatur Lote, haben typischerweise eine Schmelztemperatur unterhalb von 220°C. Durch die relativ niedrige Schmelztemperatur ist auch die Einsatztemperatur des Temperatursensors auf einen Bereich von ca. 200°C beschränkt.

Alternativ gibt es bleifreie Lote mit einer Schmelztemperatur von über 900°C, welche typischerweise Silber basiert sind. Nachteilig an diesen Loten ist, dass zu deren Verarbeitung eine hohe Prozesstemperatur benötigt wird, sodass ein damit zu lötendes Temperatursensorelement ebenfalls diesen Temperaturen standhalten muss.

Aktuell ist in der Verbindungstechnik keine Technologie bekannt, die einen zuverlässigen und thermisch gut gekoppelten Einbau eines Temperatursensorelementes in ein Gehäuse ermöglicht, sodass ein Einsatz auch bei hohen Temperaturen, insbesondere bei Temperaturen im Bereich von ca. 200 - 900 °C möglich ist.

Daneben weisen konventionelle Löttechniken oftmals das Problem der Lunkerbildung, d.h. dem Luft- und Flussmitteleinschluss in einem nicht gewünschten Anteil, auf. Die Lunkerbildung führt wiederum dazu, dass die thermische Wechselwirkung zwischen Medium und dem Temperatursensorelement beeinträchtigt wird.

Die DE 10 2010 050 315 A1 offenbart einen Temperaturfühler vom Typ Pt-1000, der durch eine sinterbare Metallisierungsschicht mit einer Leiterbahn eines Keramiksubstrats verbunden ist.

Die DE 10 2013 208 785 A1 offenbart ein thermisches Durchflussmessgerät, das ein Gehäuse aufweist, welches Gehäuse mit dem zu messenden Medium in Berührung kommt.

Der Erfindung liegt somit die Aufgabe zugrunde, die eingangs beschriebenen Nachteile des Stands der Technik zu überwinden.

Die Aufgabe wird erfindungsgemäß durch ein Verfahren zur Herstellung eines Temperatursensors, ein Temperatursensor zum Einsatz bei hohen Temperaturen und einer Verwendung des Temperatursensors in einer Strömungsmessvorrichtung gelöst.

Hinsichtlich des Verfahrens wird die Aufgabe durch ein wie in dem Anspruch 1 definiertes Verfahren zur Herstellung eines Temperatursensors gelöst.

Hinsichtlich des Temperatursensors wird die Aufgabe durch einen wie in dem Anspruch 9 definierten Temperatursensor gelöst.

Hinsichtlich der Verwendung wird die Aufgabe durch die in dem Anspruch 13 definierte Verwendung eines Temperatursensor gelöst.

Die Erfindung wird anhand der nachfolgenden Zeichnungen näher erläutert. Es zeigt:
Fig. 1: ein erstes Ausführungsbeispiel des erfindungsgemäßen Temperatursensors mit einer ersten Anordnungsvariante bezüglich der Kontaktdrähte,
Fig. 2: ein zweites Ausführungsbeispiel des erfindungsgemäßen Temperatursensors mit zwei weiteren Anordnungsvarianten bezüglich der Kontaktdrähte,
Fig. 3: ein drittes Ausführungsbeispiel des erfindungsgemäßen Temperatursensors, und
Fig. 4: ein schematisches Flussdiagramm des erfindungsgemäßen Verfahrens.

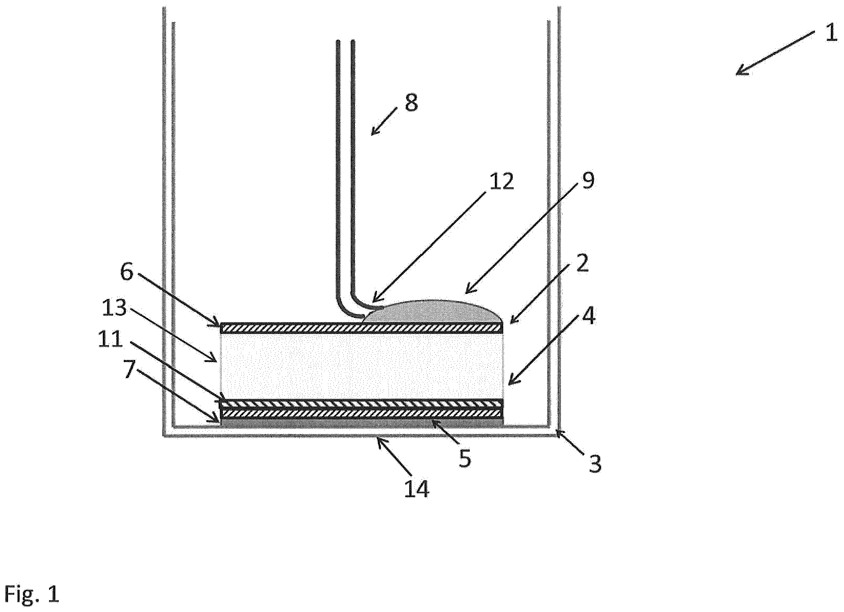

Fig. 1 zeigt ein erstes Ausführungsbeispiel des erfindungsgemäßen Temperatursensors. Der Temperatursensor 1 umfasst dabei ein Temperatursensorelement 2 und ein Gehäuse 3. Das in Fig. 1 gezeigte Gehäuse 3 stellt typischerweise ein auf seiner Unterseite abgeschlossenes Röhrchen, vorzugsweise ein metallisches Röhrchen dar.

Das Temperatursensorelement 2 weist ein Substrat 4, bspw. ein Keramiksubstrat, eine funktionale Schicht 6 zur Bestimmung einer Temperatur, bspw. eine Platinmäanderstrukutur mit einem definierten temperaturabhängigen Widerstand, und eine metallisierte Seite 11 auf.

Die funktionale Schicht 6 ist über Kontaktdrähte 8 mit einer entsprechenden Elektronik (in Fig. 1 nicht dargestellt), die die Umsetzung des Widerstandswertes in einen Temperaturwert durchführt, verbunden. Hierzu sind gemäß dem in Fig. 1 dargestellten ersten Ausführungsbeispiel die Kontaktdrähte 8 über deren Drahtansätze 12 derartig auf der funktionalen Schicht 6 bzw. einer dafür vorgesehenen Kontaktfläche angeordnet, dass die Drahtansätze 12 von der Gehäusewand des Gehäuses 3 weggerichtet sind, sodass diese nicht in Kontakt mit der Gehäusewand kommen.

Die Kontaktdrähte 8 der in Fig. 1 dargestellten ersten Varianten bezüglich der Kontaktierung des erfindungsgemäßen Temperatursensors mittels Kontaktdrähten ersten Ausführungsbeispiels zeigen, dass die Drahtansätze 12 zuerst im Wesentlichen parallel zu einer Substratoberfläche bevor anschließend der Drahtfortsätze dann im Wesentlichen parallel in Bezug zu einer Mittelachse, die orthogonal auf der Substratoberfläche steht, verlaufen. In diesem Ausführungsbeispiel ist die metallisierte Seite 11 auf der der funktionalen Schicht 6 gegenüberliegende Seiten des Temperatursensorelementes 2 angeordnet.

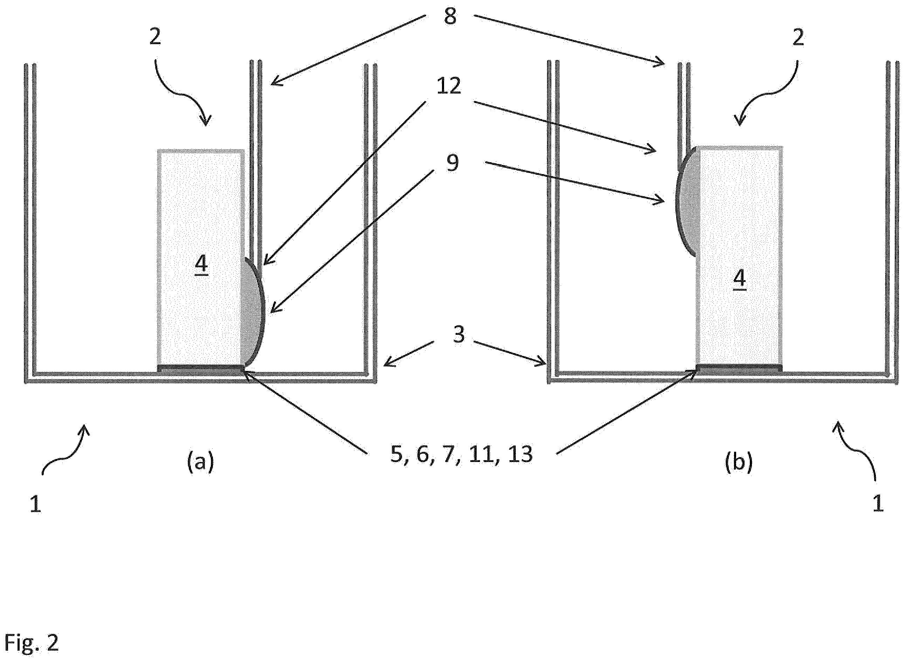

Die metallisierte Seite 11 ist, wie in Fig. 1 dargestellt, typischerweise auf der der funktionalen Schicht 6 gegenüberliegende Seiten des Temperatursensorelementes 2 angeordnet. Denkbar ist aber auch eine Ausgestaltung, bei der eine Seitenwand 13 des Temperatursensorelementes 2 zumindest teilweise als metallisierte Seite 11 dient (vgl. Fig. 2).

Das in Fig. 1 dargestellte Gehäuse 3 ist einstückig. Beispielsweise dient hier ein Röhrchen, welches an zumindest einem Ende geschlossen ist, als Gehäuse 3. Das Temperatursensorelement 2 wird bei dieser Variante mit einer Bodenwand des Röhrchens 14, welche als Träger dient, über eine Silbersinterschicht 5 verbunden.

In Fig. 2 sind zwei weitere mit (a) und (b) gekennzeichnete alternative Varianten bezüglich der Kontaktierung des erfindungsgemäßen Temperatursensors mittels der Kontaktdrähte dargestellt.

Diese Varianten zeigen, dass sowohl die Drahtansätze als auch die Drahtfortsätze im Wesentlichen parallel zur Substratoberfläche verlaufen. Der Draht weist also keine Biegung oder ähnliches auf. Diese Varianten reduzieren die Gefahr, dass eine unbeabsichtigte Berührung der Kontaktdrähte an einer Gehäusewand stattfindet.

Ferner unterscheiden sich die in Fig. 2 dargestellten Varianten bezüglich der in Fig. 1 dargestellten Ausgestaltung dadurch, dass eine Seitenwand 13 des Temperatursensorelementes 2 zumindest teilweise als metallisierte Seite 11 dient. Somit ist das Temperatursensorelement quasi hochkant in dem Gehäuse angeordnet. Diese Varianten bieten somit den Vorteil, dass das Temperatursensorelement auch in einem sehr kleinen Gehäuse, bspw. einem Röhrchen mit nur einigen Millimetern Durchmesser, eingebracht werden kann.

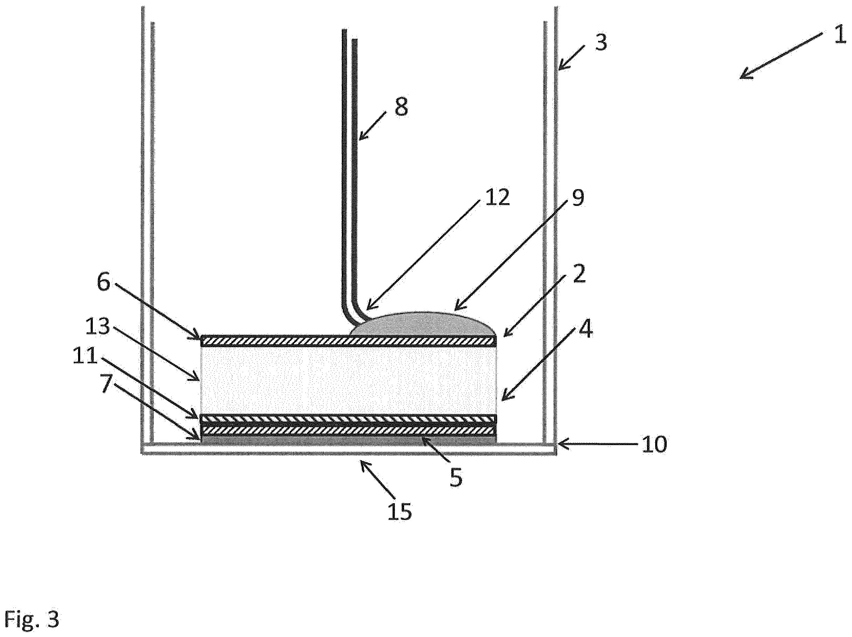

Fig. 3 zeigt eine schematische Darstellung einer alternativen Ausgestaltung des erfindungsgemäßen Temperatursensors 1, bei der das Gehäuse 3 aus zwei Teilen aufgebaut ist. Hierbei ist der Aufbau des Temperatursensorelementes 2 im Wesentlichen wie zuvor beschrieben.

Einzig das Gehäuse 3 unterscheidet sich dahingehend, dass als Boden des Gehäuses bzw. des Röhrchens ein Träger, bspw. ein Plättchen 15, dient, welches nachdem das Temperatursensorelement 2 auf dem Plättchen 15 fixiert wurde, mit der Gehäusewand bzw. der Wand des Röhrchens verbunden wird. Typischerweise wird diese Verbindung stoffschlüssig, bspw. durch Schweißen, hergestellt. Zur Veranschaulichung ist in Fig. 3 die Verbindungsstelle mit dem Bezugszeichen 10 dargestellt. Diese Vorgehensweise bietet den Vorteil, dass eine vereinfachte Anordnung bzw. Platzierung des Temperatursensorelementes 2 auf dem Plättchen 15 im Vergleich zu dem Boden des Röhrchens möglich ist.

Ferner weist sowohl die in Fig. 1 dargestellte Ausgestaltung des Temperatursensors 1 mit einem einstückigen Gehäuse 3 als auch die in Fig. 3 dargestellte Ausgestaltung mit einem zweiteiligen Gehäuse 3, 15 eine Verbindungsschicht 7 auf. Die Verbindungsschicht 7 enthält Gold, Silber und/oder Platin. In dem Fall eines einstückigen Gehäuses 3, wird die Verbindungsschicht 7 auf eine Bodenwand des Gehäuses 14, welche als Träger dient, aufgebracht und in dem Fall, eines aus zwei Teilen aufgebauten Gehäuses 3, 15, wird die Verbindungsschicht auf bspw. ein Plättchen 15, welches als Träger dient, aufgebracht. Dieses Plättchen 15 wird in einem späteren Verfahrensschritt dann mit einem Gehäuse 3, welches zunächst keinen Gehäuseboden aufweist, verbunden.

Die Verbindungsschicht 7 dient der Haftvermittlung zwischen Substrat 4 und dem Träger auf den das Substrat 4 während des Herstellprozess aufgebracht wird.

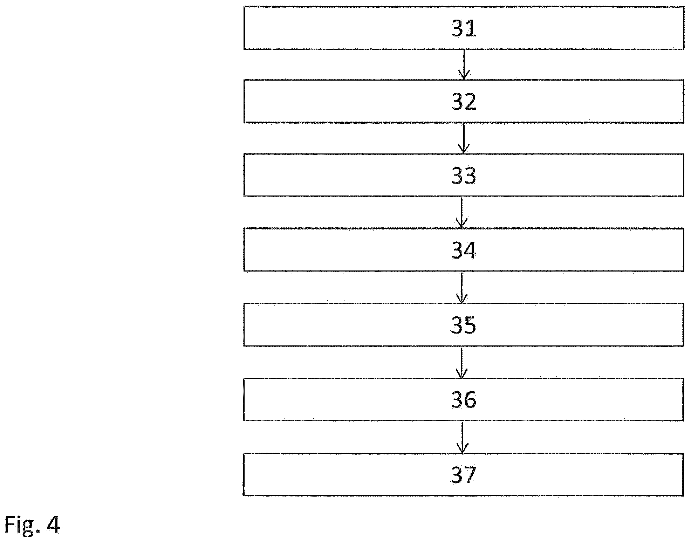

Fig. 4 zeigt ein schematisches Flussdiagramm mit den einzelnen Verfahrensschritten des erfindungsgemäßen Verfahrens. Das erfindungsgemäße Verfahren weist dabei die folgenden Schritte auf:
- Im Schritt 31 wird eine Reinigung des Trägers 14 oder 15, auf dem das Temperatursensorelement 2 fixiert werden soll, durchgeführt. Vorzugsweise wird diese Reinigung mittels Aceton und/oder Isopropanol durchgeführt. Als besonders vorteilhaft hat sich die nasschemische Reinigung mit anschließender lonenätzung und/oder eine Plasmareinigung herausgestellt.
- Im Schritt 32 wird eine Gold-, Silber- oder Palladiumschicht als Verbindungsschicht 7 auf den Träger 14 oder 15 aufgebracht.
- Anschließend wird im Schritt 33 eine Silbersinterpastenschicht 5 mittels einer Silbersinterpaste erzeugt. Das Aufbringen der Silbersinterpaste kann dabei sowohl auf dem Träger 14 oder 15 als auch auf der metallisierten Seite 11 des Substrats 4 des Temperatursensorelementes 2 erfolgen. Als vorteilhaft hat es sich erwiesen, insbesondere in dem Fall, dass als Träger die Bodenwand des einstückigen Gehäuses, bspw. in Form eines Röhrchens, dienen soll, wenn die Silbersinterpastenschicht 5 auf die metallisierte Seite 11 des Substrates 4 aufgebracht wird.
- Im Schritt 34 wird dann das Temperatursensorelement bzw. der Temperaturfühler auf den bzw. dem Träger aufgebracht bzw. angeordnet. Das Aufbringen bzw. Anordnen erfolgt vorzugsweise mittels eines definierten Druckes, sodass eine definierte Schichtdicke der Silberleitschicht entsteht.
- Im anschließenden Schritt 35 erfolgt das Sintern der Silbersinterpastenschicht 5 durch Ausheizen des Temperatursensors 1 in einem Ofen. Hierbei hat es sich als besonders vorteilhaft erwiesen, wenn für die Ausheizung mindestens zwei ansteigende Temperaturrampen verwendet werden. Dabei wird der Ofen mit der ersten Temperaturrampe, die bspw. in 10°C pro Minute heizt, von Raumtemperatur auf eine erste Temperatur aufgeheizt. Anschließend wird der Ofen für eine erste Zeitspanne bei der ersten Temperatur gehalten, sodass Lösungsmittel, welches sich in der Silbersinterpastenschicht befindet, verdampfen kann. Anschließend wird der Ofen auf eine zweite Temperatur geheizt. Hierzu wird vorteilhafterweise eine zweite Temperaturrampe verwendet, die bspw. in 50°C pro Minute heizt. Bei der zweiten Temperatur findet anschließend das eigentliche Sintern der Silbersinterpastenschicht statt. Nachdem der Ofen für eine definierte Zeitspanne bei der zweiten Temperatur gehalten wird, erfolgt anschließend eine Abkühlung mittels einer abfallenden Temperaturrampe.
- Im weiteren Schritt 36, welcher nur in dem Fall durchgeführt wird, dass das Gehäuse 3 aus zwei Teilen aufgebaut ist, wird eine Verbindung, vorzugsweise eine stoffschlüssige Verbindung, des Plättchens 15 als Träger mit der Gehäusewand 36 hergestellt.
- In einem letzten Schritt 37, welcher nur bei Bedarf durchgeführt wird, wird das Temperatursensorelement 2 in dem Gehäuse 3 vergossen. Hierzu eignen sich sowohl Keramik- als auch Polymervergusse.

### Bezugszeichenliste

- 1: Temperatursensor
- 2: Temperatursensorelement
- 3: Gehäuse
- 4: Substrat
- 5: Silbersinterpastenschicht bzw. Silbersinterschicht
- 6: Funktionale Schicht
- 7: Verbindungsschicht
- 8: Verbindungsdraht
- 9: Abdeckpaste
- 10: Verbindungsstelle
- 11: Metallisierte Seite
- 12: Drahtansätze
- 13: Seitenwand des Temperatursensorelementes
- 14: Bodenwand des einstückigen Gehäuses als Träger
- 15: Plättchen als Träger
- 31: Verfahrensschritt des Reinigens des Trägers
- 32: Verfahrensschritt des Aufbringens der Verbindungsschicht
- 33: Verfahrensschritt des Aufbringens einer Silbersinterschicht
- 34: Verfahrensschritt des Aufbringens des Temperatursensorelementes
- 35: Verfahrensschritt des Sinterns der Silbersinterpastenschicht
- 36: Verfahrensschritt des Verbindens des Trägers mit dem Gehäuse
- 37: Verfahrensschritt des Vergießen des Temperatursensorelementes

## Patentansprüche

1. Verfahren zur Herstellung eines Temperatursensors (1) zum Einsatz bei Temperaturen oberhalb von in etwa 200 °C, welcher zumindest ein Temperatursensorelement (2) mit einer zumindest teilweise metallisierten Seite (11) und eine Gehäusewand (3) eines Gehäuses umfasst, wobei das Verfahren zumindest die folgenden Schritte aufweist:
- Aufbringen einer Verbindungsschicht, welche zumindest Gold, Silber und/oder Palladium aufweist, auf die Gehäusewand (32);
- Aufbringen einer Silbersinterpastenschicht (33);
- Anordnen des Temperatursensorelementes auf der Gehäusewand, sodass das Temperatursensorelement mit der zumindest teilweise metallisierten Seite über die Verbindungsschicht und die Silberpastenschicht mit der Gehäusewand verbunden ist (34);
- Sintern der Silbersinterpastenschicht zum Verbinden des Temperatursensorelementes mit der Gehäusewand (35).

2. Verfahren nach Anspruch 1, wobei die Silbersinterpastenschicht (5) auf die Verbindungsschicht (7) des Trägers (3) aufgebracht wird.

3. Verfahren nach Anspruch 1, wobei die Silbersinterpastenschicht (5) auf die zumindest teilweise metallisierte Seite (11) des Temperatursensorelements (2) aufgebracht wird.

4. Verfahren nach einem der Ansprüche 1 bis 3, wobei der Träger (3) nach dem Anordnen des Temperatursensorelementes (2) und dem Sintern der Silbersinterpastenschicht mit einem Gehäuse (3) stoffschlüssig verbunden wird.

5. Verfahren nach einem oder mehreren der vorhergehenden Ansprüche, wobei zum Sintern der Silbersinterpastenschicht (5) ein Temperaturprofil mit zumindest einer ansteigenden Temperaturrampe verwendet wird.

6. Verfahren nach einem oder mehreren der vorhergehenden Ansprüche, wobei die zumindest teilweise metallisierte Seite (11) zumindest Gold, Silber und/oder Palladium aufweist.

7. Verfahren nach einem oder mehreren der vorhergehenden Ansprüche, wobei die zumindest teilweise metallisierte Seite (11) über einen Dünnschichtprozess erzeugt wird.

8. Verfahren nach einem oder mehreren der vorhergehenden Ansprüche, wobei beim Sintern der Silbersinterpastenschicht (5) ein definierter Druck auf das Temperatursensorelement (2) aufgebracht wird, sodass eine definierte Schichtdicke der Silbersinterpastenschicht (5) entsteht.

9. Temperatursensor (1) zum Einsatz bei Temperaturen oberhalb von in etwa 200°C, mit einem Gehäuse (3) in dem zumindest ein Temperatursensorelement (2) angeordnet ist, wobei das Temperatursensorelement (2) eine zumindest teilweise metallisierte Seite (11) aufweist und über die zumindest teilweise metallisierte Seite (11) mit einer Silbersinterschicht (5) verbunden ist, wobei die Silbersinterschicht (5) entweder über eine Verbindungsschicht (7), welche zumindest Gold, Silber und/oder Palladium umfasst, mit einer Gehäusewand des Gehäuses (3) oder unmittelbar mit einer Gehäusewand, welche zumindest Gold, Silber und/oder Palladium umfasst, mit dem Gehäuse verbunden ist, wobei das Temperatursensorelement (2) zumindest über die Gehäusewand des Gehäuses (3) und die Silbersinterschicht (5) mit der zu bestimmenden Temperatur beaufschlagt ist.

10. Temperatursensor nach Anspruch 9, wobei das Temperatursensorelement (2) eine funktionale Schicht (6) zur Bestimmung einer Temperatur umfasst.

11. Temperatursensor nach Anspruch 10, wobei zumindest zwei Kontaktdrähte (8) zur Kontaktierung der funktionalen Schicht (6) mit einer Elektronik vorgesehen sind, wobei die Kontaktdrähte (8) über Drahtansätze (12) derartig auf der funktionalen Schicht (6) angeordnet sind, dass die Drahtansätze (12) von der Gehäusewand des Gehäuses (3) weggerichtet sind.

12. Temperatursensor nach Anspruch 10 oder 11, wobei die zumindest teilweise metallisierte Seite (11) eine der funktionalen Schicht (6) gegenüberliegende Seite des Temperatursensorelementes (2) oder eine zur funktionalen Schicht (6) im Wesentlichen orthogonal angeordnete Seitenwand des Temperatursensorelementes ist.

13. Verwendung eines Temperatursensors nach einem der Ansprüche 9 bis 12 als ein Heizelement, insbesondere als Heizelement in einer Strömungsmessvorrichtung.

## Claims

1. Procedure for the production of a temperature sensor (1) for use at temperatures above approximately 200 °C, said sensor having at least a temperature sensor element (2) with at least a partially metalized side (11) and a housing wall (3) of a housing, said procedure comprising at least the following steps:
- Application of a connecting layer on the housing wall (32), said layer comprising at least gold, silver and/or palladium;
- Application of a silver sintering paste (33);
- Arrangement of the temperature sensor element on the housing wall in such a way that the temperature sensor element is connected, with the at least partially metalized side, to the housing wall via the connecting layer and the silver paste layer (34);
- Sintering of the silver sintering paste layer to connect the temperature sensor element to the housing wall (35).

2. Procedure as claimed in Claim 1, wherein the silver sintering paste layer (5) is applied to the connecting layer (7) of the carrier (3).

3. Procedure as claimed in Claim 1, wherein the silver sintering paste layer (5) is applied to the at least partially metalized side (11) of the temperature sensor element (2).

4. Procedure as claimed in one of the Claims 1 to 3, wherein the carrier (3) is connected by substance-to-substance connection to a housing (3) following the arrangement of the temperature sensor element (2) and the sintering of the silver sintering paste layer.

5. Procedure as claimed in one or more of the previous claims, wherein a temperature profile with at least an increasing temperature ramp is used to sinter the silver sintering paste layer (5).

6. Procedure as claimed in one or more of the previous claims, wherein the at least partially metalized side (11) at least features gold, silver and/or palladium.

7. Procedure as claimed in one or more of the previous claims, wherein the at least partially metalized side (11) is generated via a thin-film process.

8. Procedure as claimed in one or more of the previous claims, wherein a defined pressure is applied to the temperature sensor element (2) during the sintering of the silver sintering paste layer (5) so that a defined layer thickness of the silver sintering paste layer (5) is produced.

9. Temperature sensor (1) for use at temperatures above approximately 200 °C, with a housing (3) in which at least one temperature sensor element (2) is arranged, wherein said temperature sensor element (2) has an at least partially metalized side (11) and is connected to a silver sinter layer (5) via the at least partially metalized side (11), wherein the silver sinter layer (5) is connected either via a connecting layer (7), which comprises at least gold, silver and/or palladium, with a wall of the housing (3), or directly with a wall of the housing, which comprises at least gold, silver and/or palladium, wherein the temperature sensor element (2) is exposed to the temperature to be determined at least via the housing wall of the housing (3) and the silver sinter layer (5).

10. Temperature sensor as claimed in Claim 9, wherein the temperature sensor element (2) comprises a functional layer (6) for the determination of a temperature.

11. Temperature sensor as claimed in Claim 10, wherein at least two contact wires (8) are provided to establish contact between the functional layer (6) and electronics, wherein the contact wires (8) are arranged on the functional layer (6) via wire mounts (12) in such a way that the wire mounts (12) are directed away from the housing wall of the housing (3).

12. Temperature sensor as claimed in Claim 10 or 11, wherein the at least partially metalized side (11) is a side of the temperature sensor element (2) situated opposite the functional layer (6) or a side wall of the temperature sensor element arranged essentially orthogonally in relation to the functional layer (6).

13. Use of a temperature sensor as claimed in one of the Claims 9 to 12 as a heating element, particularly as a heating element in a flow measuring unit.

## Revendications

1. Procédé destiné à la fabrication d'un capteur de température (1) destiné à une utilisation avec des températures supérieures à environ 200 °C, lequel capteur comporte au moins un élément de capteur de température (2) avec une face (11) au moins partiellement métallisée et une paroi d'un boîtier (3), le procédé comprenant au moins les étapes suivantes :
- Application d'une couche de liaison, laquelle comprend au moins de l'or, de l'argent et/ou du palladium, sur la paroi de boîtier (32) ;
- Application d'une couche de pâte frittée d'argent (33) ;
- Agencement de l'élément de capteur de température sur la paroi de boîtier, de telle sorte que l'élément de capteur de température soit relié (34), avec sa face au moins partiellement métallisée, avec la paroi de boîtier par l'intermédiaire de la couche de liaison et la couche de pâte d'argent ;
- Frittage de la couche de pâte frittée d'argent pour la liaison de l'élément de capteur de température avec la paroi de boîtier (35).

2. Procédé selon la revendication 1, pour lequel la couche de pâte frittée d'argent (5) est appliquée sur la couche de liaison (7) du support (3).

3. Procédé selon la revendication 1, pour lequel la couche de pâte frittée d'argent (5) est appliquée sur la face (11) au moins partiellement métallisée de l'élément de capteur de température (2).

4. Procédé selon l'une des revendications 1 à 3, pour lequel le support (3) est relié par liaison de matière avec un boîtier (3) après l'agencement de l'élément de capteur de température (2) et le frittage de la couche de pâte frittée d'argent.

5. Procédé selon l'une ou plusieurs des revendications précédentes, pour lequel est utilisé, pour le frittage de la couche de pâte frittée d'argent (5), un profil de température avec au moins une rampe de température croissante.

6. Procédé selon l'une ou plusieurs des revendications précédentes, pour lequel la face (11) au moins partiellement métallisée comprend au moins de l'or, de l'argent et/ou du palladium.

7. Procédé selon l'une ou plusieurs des revendications précédentes, pour lequel la face (11) au moins partiellement métallisée est générée au moyen d'un procédé à couche mince.

8. Procédé selon l'une ou plusieurs des revendications précédentes, pour lequel, lors du frittage de la couche de pâte frittée d'argent (5), une pression définie est appliquée sur l'élément de capteur de température (2), si bien qu'il en résulte une épaisseur définie de la couche de pâte frittée d'argent (5).

9. Capteur de température (1) destiné à une utilisation avec des températures supérieures à environ 200 °C, avec un boîtier (3) dans lequel est agencé au moins un élément de capteur de température (2), l'élément de capteur de température (2) présentant une face (11) au moins partiellement métallisée et étant relié via la face (11) au moins partiellement métallisée avec une couche frittée d'argent (5), la couche frittée d'argent (5) étant reliée, soit via une couche de liaison (7), laquelle comprend au moins de l'or, de l'argent et/ou du palladium, avec une paroi du boîtier (3), soit directement avec une paroi de boîtier, laquelle comprend au moins de l'or, de l'argent et/ou du palladium, l'élément de capteur de température (2) étant soumis à la température à déterminer au moins par l'intermédiaire de la paroi du boîtier (3) et la couche frittée d'argent (5).

10. Capteur de température selon la revendication 9, pour lequel l'élément de capteur de température (2) comprend une couche fonctionnelle (6) destinée à la détermination d'une température.

11. Capteur de température selon la revendication 10, pour lequel sont prévus au moins trois fils de contact (8) pour l'établissement d'un contact de la couche fonctionnelle (6) avec une électronique, les fils de contact (8) étant agencés via des embases de fil (12) sur la couche fonctionnelle (6) de telle sorte que les embases de fil (12) soient dirigées à l'écart de la paroi du boîtier (3).

12. Capteur de température selon la revendication 10 ou 11, pour lequel la face (11) au moins partiellement métallisée est une face de l'élément de capteur de température (2) située à l'opposé de la couche fonctionnelle (6) ou est une paroi latérale de l'élément de capteur de température disposée pour l'essentiel orthogonalement à la couche fonctionnelle (6).

13. Utilisation d'un capteur de température selon l'une des revendications 9 à 12 en tant qu'élément chauffant, notamment en tant qu'élément chauffant d'un dispositif de mesure d'écoulement.
